# EUROPÄISCHE PATENTSCHRIFT

(11) **EP 2 376 284 B1**
(45) Veröffentlichungstag und Bekanntmachung des Hinweises auf die Patenterteilung: **14.12.2016**
(21) Anmeldenummer: 10700690.0
(22) Anmeldetag: 08.01.2010
(51) Int. Cl.: B32B 5/18, B32B 7/02, B32B 27/08, B32B 27/20, B29C 55/16, B32B 27/06, B32B 27/36, B29C 55/02, B29K 105/24

(54) **VERFAHREN ZUR HERSTELLUNG EINES SYNTHETISCHEN PAPIERS UND DAMIT HERGESTELLTES PAPIER**
A PROCESS FOR PRODUCING SYNTHETIC PAPER AND PAPER THUS OBTAINED
PROCÉDÉ POUR LA FABRICATION D'UN PAPIER SYNTHÉTIQUE ET UN PAPIER AINSI OBTENU

(30) Priorität: 09.01.2009 AT 282009
(43) Veröffentlichungstag der Anmeldung: 19.10.2011
(73) Patentinhaber: Polymer Competence Center Leoben GmbH, 8700 Leoben (AT)
(72) Erfinder: LASKE, Stephan, 8010 Graz (AT); LANGECKER, Günter, R., 58540 Meinerzhagen (DE); FRIESENBICHLER, Walter, 8700 Leoben (AT)
(74) Vertreter: Wirnsberger, Gernot
(86) Internationale Anmeldenummer: PCT/AT2010/000003
(87) Internationale Veröffentlichungsnummer: WO 2010/078610

(56) Entgegenhaltungen:
- EP-A1- 1 116 745
- EP-A1- 1 245 616
- WO-A1-02/087851
- DE-A1- 10 127 314
- US-A- 4 075 050
- DATABASE WPI Week 200868 Thomson Scientific, London, GB; AN 2008-L60384 XP002576340 & JP 2008 163136 A (SUMITOMO DENKO FINE POLYMER KK) 17. Juli 2008 (2008-07-17)

## Beschreibung

Die Erfindung betrifft ein Verfahren zur Herstellung eines synthetischen Papiers, das aus einer oder mehreren Schichten besteht, wobei die Schicht bzw. Schichten mit einem oder mehreren Polymeren gebildet sind.

Des Weiteren betrifft die Erfindung ein synthetisches Papier, welches mit einem solchen Verfahren hergestellt ist.

Als synthetische Papiere werden Materialien bezeichnet, welche ein Aussehen und Eigenschaften ähnlich herkömmlichen Papieren aufweisen, im Gegensatz zu diesen jedoch nicht auf Cellulosebasis gefertigt sind.

Aus dem Stand der Technik sind eine Vielzahl von Verfahren zur Herstellung synthetischer Papiere bekannt geworden, mit welchen synthetische Papiere für unterschiedliche Einsatzzwecke hergestellt werden können. So ist es beispielsweise bekannt, durch Extrusion mit Calciumcarbonatpartikel gefüllte Folien bzw. synthetische Papiere aus Polyethylen herzustellen, die für farbig bedruckte Visiten- oder Straßenkarten eingesetzt werden. Wiewohl derartige Folien bzw. synthetische Papiere für die beabsichtigten Einsatzzwecke brauchbar sind, so weisen diese wie auch nach anderen Verfahren hergestellte synthetische Papiere doch den Nachteil auf, dass die synthetischen Papiere eine zu geringe thermische Stabilität haben, um in einem Laserdruckverfahren eingesetzt werden zu können, bei welchem punktuell am bzw. im Papier Temperaturen bis zu 200 °C auftreten, was in ähnlicher Weise für mehrlagig bzw. mehrschichtig aufgebaute synthetische Papiere zutrifft. Darüber hinaus weisen herkömmliche synthetische Papiere oftmals nur eine geringe mechanische Festigkeit auf und/oder unterliegen im Laufe der Zeit bei einer Lagerung oder bei Beanspruchung einem Verzug.

Die EP 1 116 745 A1 offenbart ein Verfahren zur Herstellung eines partikelhältigen und verstreckten Filmes aus einem Polymer, wobei der Film wärmebehandelt wird und anschließend oberflächenbehandelt wird, wobei bei der Oberflächenbehandlung ein Vernetzungsmittel eingesetzt werden kann.

Die JP 2008 163136 A offenbart ein Verfahren zur Herstellung einer Folie aus Polymilchsäure, wobei eine Mischung aus kristalliner Polymilchsäure und vernetzter, nicht kristalliner Polymilchsäure und einem Harz zu einer Folie geformt wird.

Hier setzt die Erfindung an. Aufgabe der Erfindung ist es, ein Verfahren der eingangs genannten Art anzugeben, mit welchem ein synthetisches Papier herstellbar ist, das bei einer Temperatur von etwa 200 °C formbeständig und daher in Laserdruckverfahren einsetzbar ist, eine hohe mechanische Festigkeit aufweist und bei Lagerung und/oder Belastung im Wesentlichen keinem Verzug unterliegt.

Diese Aufgabe wird erfindungsgemäß bei einem Verfahren der eingangs genannten Art gelöst, wenn das Verfahren folgende Schritte umfasst:
a) Extrudieren oder Coextrudieren einer Folie umfassend das oder die Polymere, wobei zumindest ein Polymer mit einem Vernetzungsmittel versehen ist und die Folie mit zwei Deckschichten und einer mittleren Schicht erstellt wird, wobei die Deckschichten mit einem Anteil von 20 bis 60 Gew.-% eines oder mehrerer Füllstoffe ausgebildet werden;
b) Verstrecken der so erstellten Folie;
c) Thermofixieren der Folie im eingespannten Zustand;
d) Vernetzen des zumindest einen Polymers, das mit einem Vernetzungsmittel versehen ist;
e) optional Behandeln zumindest einer Oberfläche der Folie;
f) optional Wickeln der Folie und/oder Zuschneiden der Folie zu synthetischem Papier.

Die mit der Erfindung erzielten Vorteile sind insbesondere darin zu sehen, dass ein synthetisches Papier bereitgestellt wird, das bei einer Temperatur von etwa 200 °C formbeständig und daher in Laserdruckverfahren einsetzbar ist, eine hohe mechanische Festigkeit aufweist und bei Lagerung und/oder im Einsatz im Wesentlichen verzugsfrei bleibt.

Durch das vorgesehene Verstrecken der erstellten Folie kann eine Optik und Haptik in gewünschter Weise eingestellt werden. Sofern in der Folie Füllstoffe in Form von Partikeln vorhanden sind, führt das Verstrecken auch dazu, dass sogenannte Vakuolen gebildet werden, da sich das Polymer beim Verstrecken von den Füllstoffpartikeln unter Bildung von Hohlräumen ablöst. Diese Hohlräume erweisen sich für eine gute Toneraufnahme als zweckmäßig. Eine gewünschte thermische und mechanische Stabilität des synthetischen Papiers wird beim erfindungsgemäßen Verfahren unter anderem durch das vorgesehene Thermofixieren sowie das anschließende Vernetzen erreicht. Beim Thermofixieren wird die Folie eingespannt bzw. unter Formzwang für eine bestimmte Zeit bei einer erhöhten Temperatur gehalten, was zu einer hohen Formstabilität auch bei Temperaturen deutlich über Raumtemperatur beiträgt. Insbesondere trägt jedoch das an das Thermofixieren anschließende Vernetzen des zumindest einen Polymers, das mit einem Vernetzungsmittel versehen ist, zur erforderlichen thermischen Stabilität bei einer Temperatur von etwa 200 °C bei. Um diese Vernetzung zu ermöglichen, wird zumindest ein Polymer bereits vor dem Extrudieren bzw. Coextrudieren mit einem Vernetzungsmittel, insbesondere Triallylisocyanurat, versehen. Nach dem Vernetzen kann die erstellte Folie im Bereich zumindest einer Oberfläche z. B. durch eine Flamm- oder Coronabehandlung oder chemisch behandelt und anschließend bei Bedarf gewickelt werden oder sogleich auf gewünschte Papiermaße wie DIN A4 zugeschnitten werden. So erstelltes synthetisches Papier weist in Bezug auf Optik, Haptik und Steifigkeit Eigenschaften wie herkömmliches Papier auf Cellulosebasis auf.

Bevorzugt ist vorgesehen, dass die Folie vorzugsweise simultan biaxial verstreckt wird, damit das synthetische Papier annähernd isotrope Eigenschaften aufweist. Dabei ist es zweckmäßig, dass ein Verstreckungsgrad entlang jeder Achse etwa 1:1,5 bis 1:2,5 beträgt. Ist der Verstreckungsgrad entlang jeder Achse gleich gewählt, so können im Wesentlichen isotrope Eigenschaften des synthetischen Papiers erreicht werden.

Das Thermofixieren kann bei einer Temperatur von etwa 100 bis 150 °C durchgeführt werden, wobei in der Regel eine Zeitdauer von 2 bis 10 Minuten ausreichend ist, um im Zusammenhang mit dem vorgesehenen Vernetzen eine ausreichende Stabilität des erstellten synthetischen Papiers bei hohen Temperaturen zu erreichen.

Für das Vernetzen der Folie wird zumindest einem Polymer vor dem Extrudieren bzw. Coextrudieren ein Vernetzungsmittel beigemengt, wobei sich Gehalte von bis zu 6 Gewichtsprozent (Gew.-%) bezogen auf die Polymermasse als günstig erwiesen haben. Das Vernetzen kann dann nach dem Thermofixieren durch Bestrahlen der Folie erfolgen. Mit einem derartigen Verfahren kann ein synthetisches Papier aus einer Folie erstellt werden, die aus einer Schicht bzw. einlagig ausgebildet ist. Dabei ist von Vorteil, dass sich eine einlagige Folie auf einfache Weise mit wenigen Hilfsmitteln ausbilden lässt. Allerdings kann es unter Umständen schwierig sein, an das synthetische Papier gestellte Anforderungen mit einer einlagigen Folie zu erreichen. Dies trifft insbesondere dann zu, wenn dem Polymer bzw. den Polymeren ein oder mehrere Füllstoffe beigemengt werden, um eine Toneraufnahme im Einsatz zu begünstigen. In diesem Fall kann das Beimengen von Füllstoffen trotz der beim Verstrecken gebildeten Vakuolen zu einer hohen Dichte der Folie bzw. des synthetischen Papiers führen, sodass das synthetische Papier dünn ausgebildet werden muss, damit ein gewünschtes Flächengewicht des Papiers, das im Regelfall zwischen 70 und 300 g/m² liegen soll, erreicht wird. Eine dünne Ausbildung ist aber insofern nachteilig, als dass dann Gebrauchseigenschaften des synthetischen Papiers ungünstig sein können. Erfindungsgemäß ist daher vorgesehen, dass die Folie mit zwei Deckschichten und einer mittleren Schicht erstellt wird. Die Deckschichten können dann mit einem Anteil von 20 bis 60 Gew.-%, vorzugsweise 35 bis 45 Gew.-%, eines oder mehrerer partikelförmiger Füllstoffe ausgebildet werden. Die mittlere Schicht kann dann ohne oder nur mit geringen Anteilen von Füllstoffen ausgebildet werden, sodass einerseits das vorstehend erwähnte Problem einer hohen Dichte nicht mehr gegeben ist. Andererseits ist im Bereich der Deckschichten eine Zusammensetzung gegeben, die eine hohe Toneraufnahme im Einsatz des synthetischen Papiers ermöglicht. Der oder die vorgesehenen Füllstoffe können ausgewählt werden aus der Gruppe bestehend aus Calciumcarbonat, Kaolin, Dolomit und Talkum. Dabei weist der Füllstoff bzw. die Füllstoffe bevorzugt eine Partikelgröße d₅₀ von 0,5 bis 10,0 µm, vorzugsweise 1,0 bis 5,0 µm, auf. Derartige Partikelgrößen von Füllstoffen bewirken auch eine hohe Festigkeit des erstellten synthetischen Papiers. Die Füllstoffpartikel können gegebenenfalls auch beschichtet sein, z. B. mit einem Wachs.

Wenn in einer ein- oder mehrschichtigen Folie partikelförmige Füllstoffe aus Calciumcarbonat oder dergleichen vorgesehen sind, erfolgt das Bestrahlen vorzugsweise bei einer Temperatur von etwa 25 °C bis 50 °C. Versuche haben erwarten lassen, dass ein Bestrahlen bei einer höheren Temperatur von z. B. 80 °C, bei der eine höhere Beweglichkeit der Polymerketten gegeben ist, zu einem höheren Vernetzungsgrad führen würde. Allerdings hat sich gezeigt, dass bei höheren Temperaturen Fettsäuren, welche die Füllstoffe regelmäßig umgeben und einen Schmelzpunkt von etwa 65 °C aufweisen, gespaltet werden, was zu einer niedrigeren Stabilität führt. Eine geringere Vernetzungstemperatur ergibt daher zwar einen niedrigeren Vernetzungsgrad, gleichzeitig aber auch eine höhere Stabilität der erstellten Folie.

Beim der mehrschichtigen Ausbildung der Folie werden vorzugsweise die äußersten Schichten mit einem Vernetzungsmittel versetzt und vernetzt, wenngleich zur Erhöhung der Stabilität der erstellten Folie auch die mittlere Schicht mit einem oder dem gleichen Vernetzungsmittel versehen und vernetzt werden kann.

Bei der mehrlagigen Ausbildung der Folie bzw. des synthetischen Papiers werden die Deckschichten des Weiteren zusätzlich mit einem Anteil von bis zu 10 Gew.-%, vorzugsweise 4 bis 9 Gew.-%, eines Pigmentes wie Titandioxid oder Zinkoxid ausgebildet, um dem synthetischen Papier ein gewünschtes Aussehen zu verleihen. Es versteht sich, dass grundsätzlich beliebige gefärbte oder weiße organische oder anorganische Pigmente eingesetzt werden können, um synthetisches Papier mit einer gewünschten Farbe zu erstellen. Auch dazwischenliegende Schichten, z. B. eine mittlere Schicht bei einer 3-Schicht-Folie, können zusätzlich mit verstärkend oder nukleierend wirkenden Füllstoffen versetzt werden.

Bei der Herstellung der mehrlagigen bzw. mehrschichtigen Folie mit einer mittleren Schicht und zwei Deckschichten, welche die mittlere Schicht umgeben und gegebenenfalls jeweils durch eine Haftvermittlungsschicht mit dieser verbunden sein können, erweist es sich als besonders zweckmäßig, wenn die mittlere Schicht als geschäumte Schicht erstellt wird. Das Schäumen der mittleren Schicht kann auf chemischem oder physikalischem Weg erfolgen. Beispielsweise kann ein Polymer für die mittlere Schicht mit einem Gas beaufschlagt werden, wobei dann dem Polymer bezogen auf die Polymermasse in einem Anteil von bis zu 2 Gew.-% ein Nukleierungshilfsmittel beigemengt wird, das gegebenenfalls auch ein chemisches Treibmittel sein kann, welches dann neben einer Keimbildung auch aktiv durch Gasabspaltung beim Schäumen beiträgt. Bei einem chemischen Schäumen wird dem Polymer ein chemisches Treibmittel beigemengt, das bei erhöhten Temperaturen Gas abspaltet. Daneben wird dem Polymer vor dem Coextrudieren ebenfalls ein Nukleierungshilfsmittel beigemengt, z. B. bis zu 15 Gew.-%, bevorzugt 10 bis 15 Gew.-%, Calciumcarbonatpartikel mit einer Partikelgröße d₅₀ von etwa 1,0 bis 2,0 µm. Zusätzlich kann auch ein Stabilisator beigemengt werden, um eine Viskosität der mittleren Schicht beim Schäumen zu erhöhen und dadurch eine Viskositätsanpassung der coextrudierten mittleren Schicht und der Deckschichten zu erreichen. In dieser Verfahrensvariante kann die mittlere Schicht mit einer besonders geringen Dichte ausgebildet werden, was von Vorteil ist, wenn dickes synthetisches Papier mit moderatem Flächengewicht erstellt werden soll.

Bei der mehrlagigen Ausbildung ist bevorzugt vorgesehen, um die vorstehend erwähnten Vorteile möglichst wirkungsvoll zur Entfaltung zu bringen, dass die mittlere Schicht zumindest 2,5-mal dicker ausgebildet wird als die Deckschichten.

Besonders bevorzugt ist es, dass das zumindest eine Polymer in einem Anteil von 51 bis 100 Gew.-% aus nachwachsenden Rohstoffen gebildet wird. Dabei ist es zweckmäßig, dass als Polymer für die Schicht oder die Schichten Polymilchsäure eingesetzt wird, die einerseits synthetisch produziert und andererseits aus natürlichen Quellen einfach gewonnen werden kann. Eine Kombination von synthetischen und natürlichen Rohstoffen oder gegebenenfalls ein exklusiver Einsatz von nachwachsenden Rohstoffen bei der Herstellung eines synthetischen Papiers erlaubt eine Nutzung natürlicher Ressourcen für die Herstellung eines hochqualitativen synthetischen Papiers, welches im Laserdruckverfahren bedruckbar ist.

Eine mehrlagige Ausformung einer Folie erfolgt bevorzugt unter Einsatz eines Mehrschichtdüsenverfahrens.

Entsprechend den dargestellten Vorteilen eines erfindungsgemäßen Verfahrens ist es ein weiteres Ziel der Erfindung, ein synthetisches Papier anzugeben, das bei der Temperatur von bis zu 200 °C formstabil ist, gute mechanische Eigenschaften aufweist und bei Lagerung und/oder bei Beanspruchung im Einsatz im Wesentlichen verzugsfrei ist. Dieses Ziel wird durch ein synthetisches Papier gemäß Anspruch 14 erreicht. Das erfindungsgemäße synthetische Papier weist überdies in Bezug auf Optik, Haptik und Steifigkeit Eigenschaften wie herkömmliches Papier auf Cellulosebasis auf.

Ein synthetisches Papier ist vorteilhafterweise durch Einsatz von geeigneten Polymeren bei der Herstellung, z. B. Polymilchsäure, so ausgebildet, dass das synthetische Papier biologisch abbaubar ist, und zwar unter Erfüllung von in der Norm EN 13432 vorgegebenen Kriterien. Dabei ist es aus ökologischen Gründen besonders bevorzugt, wenn das synthetische Papier mit Polymeren gebildet ist, die aus nachwachsenden Rohstoffen gewonnen sind.

Weitere Merkmale, Vorteile und Wirkungen der Erfindung ergeben sich aus dem im Folgenden dargestellten Ausführungsbeispiel der Erfindung.

Eine Folie mit einer mittleren Schicht mit einer Dicke von etwa 160 µm sowie zwei die mittlere Schicht umgebenden Deckschichten mit einer Dicke von jeweils etwa 20 µm wurde im Coextrusionsverfahren bei einer Temperatur von etwa 200 °C erstellt. Die Deckschichten wiesen jeweils eine Zusammensetzung von 40 Gew.-% Caliciumcarbonatpartikel (Partikelgröße d₅₀: 3,5 µm), 5 Gew.-% Titandioxid (Partikelgröße d₅₀: 4,0 µm), etwa 5,0 Gew.-% Triallylisocyanurat als Vernetzungsmittel sowie Polymilchsäure als Rest auf. Die mittlere Schicht bestand aus 1,5 Gew.-% eines polymeren Treibmittels, das bei einer Temperatur von 135 bis 220 °C CO₂ abspaltet, und Polymilchsäure als Rest. Für alle Schichten wurde dieselbe Polymilchsäure eingesetzt, die eine Dichte von etwa 1,2 g/cm³, eine Schmelztemperatur von etwa 140 °C, einen Geliergrad von etwa 50 % und eine Schmelz-Massefließrate, gemessen nach ISO 1133, von etwa 10 g/10 min aufwies. Im Anschluss an die Coextrusion wurde die erstellte Folie bei einer Temperatur von 85 °C biaxial verstreckt, wobei ein Verstreckungsgrad entlang jeder Achse 1:1,9 betrug. Danach wurde die Folie im eingespannten Zustand auf eine Temperatur von 150 °C erwärmt und für 5 Minuten auf dieser Temperatur gehalten. Anschließend wurde die Folie abkühlen gelassen und bestrahlt, um die Deckschichten zu vernetzen, wobei eine Spannung 10 MeV und eine Bestrahlungsdosis 50 kGy betrug. Anschließend wurde die Folie in Blätter im Format DIN A4 zugeschnitten.

Das so hergestellte synthetische Papier wies eine flächenbezogene Masse von 89,5 g/m² auf, gemessen nach ISO 536. Eine Dicke nach ISO 534 betrug 142,1 µm, eine Opazität nach ISO 2471 betrug 93,4 % und eine Glätte nach Bekk (ISO 5627) betrug 51,1 s. Ein Biegewiderstand gemessen nach ISO 2493, aber mit einer verkürzten Biegelänge von 10 mm war sowohl in Längs- als auch Querrichtung größer als 70 mN. Eine Doppelfalzzahl nach ISO 5626 lag über 50.

Das synthetische Papier war über lange Zeit formstabil bzw. verzugsfrei und konnte ohne Probleme in handelsüblichen Laserdruckern z. B. zum Kopieren eingesetzt werden. Das synthetische Papier konnte darüber hinaus auch geknickt werden, ohne dass das Knicken deutlich sichtbare Knickspuren hinterließ.

## Patentansprüche

1. Verfahren zur Herstellung eines synthetischen Papiers, das aus einer oder mehreren Schichten besteht, wobei die Schicht bzw. Schichten mit einem oder mehreren Polymeren gebildet sind, **dadurch gekennzeichnet, dass** das Verfahren folgende Schritte umfasst:
a) Coextrudieren einer Folie umfassend das oder die Polymere, wobei zumindest ein Polymer mit einem Vernetzungsmittel versehen ist und die Folie mit zwei Deckschichten und einer mittleren Schicht erstellt wird, wobei die Deckschichten mit einem Anteil von 20 bis 60 Gew.-% eines oder mehrerer partikelförmiger Füllstoffe ausgebildet werden;
b) Verstrecken der so erstellten Folie;
c) Thermofixieren der Folie im eingespannten Zustand;
d) Vernetzen des zumindest einen Polymers, das mit einem Vernetzungsmittel versehen ist;
e) optional Behandeln zumindest einer Oberfläche der Folie;
f) optional Wickeln der Folie und/oder Zuschneiden der Folie zu synthetischem Papier.

2. Verfahren nach Anspruch 1, **dadurch gekennzeichnet, dass** die Folie biaxial verstreckt wird.

3. Verfahren nach Anspruch 2, **dadurch gekennzeichnet, dass** ein Verstreckungsgrad entlang jeder Achse etwa 1:1,5 bis 1:2,5 beträgt.

4. Verfahren nach einem der Ansprüche 1 bis 3, **dadurch gekennzeichnet, dass** das Thermofixieren bei einer Temperatur von etwa 100 bis 150 °C durchgeführt wird.

5. Verfahren nach Anspruch 4, **dadurch gekennzeichnet, dass** das Thermofixieren während einer Zeitdauer von 2 bis 10 Minuten durchgeführt wird.

6. Verfahren nach Anspruch 1, **dadurch gekennzeichnet, dass** die Deckschichten mit einem Anteil von 35 bis 45 Gew.-% des oder der partikelförmigen Füllstoffe ausgebildet werden.

7. Verfahren nach Anspruch 1, **dadurch gekennzeichnet, dass** der oder die Füllstoffe ausgewählt werden aus der Gruppe bestehend aus Calciumcarbonat, Kaolin, Dolomit und Talkum.

8. Verfahren nach Anspruch 1, **dadurch gekennzeichnet, dass** der oder die Füllstoffe eine Partikelgröße d₅₀ von 0,5 bis 10,0 µm, vorzugsweise 1,0 bis 5,0 µm, aufweisen.

9. Verfahren nach Anspruch 1, **dadurch gekennzeichnet, dass** die Deckschichten mit einem Anteil von bis zu 10 Gew.-%, vorzugsweise 4 bis 9 Gew.-%, eines Pigmentes wie Titandioxid oder Zinkoxid ausgebildet werden.

10. Verfahren nach Anspruch 1, **dadurch gekennzeichnet, dass** die mittlere Schicht als geschäumte Schicht erstellt wird.

11. Verfahren nach Anspruch 1, **dadurch gekennzeichnet, dass** die mittlere Schicht zumindest 2,5-mal dicker ausgebildet wird als die Deckschichten.

12. Verfahren nach einem der Ansprüche 1 bis 11, **dadurch gekennzeichnet, dass** das zumindest eine Polymer in einem Anteil von 51 bis 100 Gew.-% aus nachwachsenden Rohstoffen gebildet wird.

13. Verfahren nach Anspruch 12, **dadurch gekennzeichnet, dass** als Polymer für die Schichten Polymilchsäure eingesetzt wird.

14. Synthetisches Papier, erhältlich nach einem der Ansprüche 1 bis 13.

15. Synthetisches Papier nach Anspruch 14, welches biologisch abbaubar ist.

16. Synthetisches Papier nach Anspruch 14 oder 15, wobei das synthetische Papier mit aus nachwachsenden Rohstoffen gewonnenen Polymeren gebildet ist.

## Claims

1. A process for the production of a synthetic paper which consists of one or more layers, wherein the layer or layers are formed with one or more polymers, **characterized in that** the process comprises the following steps:
a) co-extruding a film comprising the polymer or polymers, wherein at least one polymer is provided with a cross-linking agent and the film is generated with two cover layers and a central layer, wherein the cover layers are formed with a proportion of 20 % to 60 % by weight of one or more particulate fillers;
b) stretching the film produced thereby;
c) thermosetting the film in the stretched condition;
d) cross-linking the at least one polymer which is provided with a cross-linking agent;
e) optionally, treating at least one surface of the film;
f) optionally, winding the film and/or cutting the film to size to form synthetic paper.

2. The process according to claim 1, **characterized in that** the film is stretched biaxially.

3. The process according to claim 2, **characterized in that** a stretching ratio along each axis is approximately 1:1.5 to 1:2.5.

4. The process according to any one of claims 1 to 3, **characterized in that** the thermosetting is carried out at a temperature of approximately 100 °C to 150 °C.

5. The process according to claim 4, **characterized in that** the thermosetting is carried out for a time period of 2 to 10 minutes.

6. The process according to claim 1, **characterized in that** the cover layers are formed with a proportion of 35 % to 45 % by weight of the particulate filler or fillers.

7. The process according to claim 1, **characterized in that** the filler or fillers are selected from the group consisting of calcium carbonate, kaolin, dolomite and talc.

8. The process according to claim 1, **characterized in that** the filler or fillers have a particle size d₅₀ of 0.5 to 10.0 µm, preferably 1.0 to 5.0 µm.

9. The process according to claim 1, **characterized in that** the cover layers are formed with a proportion of up to 10 % by weight, preferably 4 % to 9 % by weight of a pigment such as titanium dioxide or zinc oxide.

10. The process according to claim 1, **characterized in that** the central layer is produced as a foamed layer.

11. The process according to claim 1, **characterized in that** the central layer is formed so as to be at least 2.5 times thicker than the cover layers.

12. The process according to any one of claims 1 to 11, **characterized in that** the at least one polymer is formed from renewable raw materials in a proportion of 51 % to 100 % by weight.

13. The process according to claim 12, **characterized in that** polylactic acid is used as the polymer for the layers.

14. A synthetic paper which can be obtained according to any one of claims 1 to 13.

15. The synthetic paper according to claim 14, which is biologically degradable.

16. The synthetic paper according to claim 14 or 15, wherein the synthetic paper is formed using polymers obtained from renewable raw materials.

## Revendications

1. Procédé de fabrication d'un papier synthétique qui est composé d'une ou plusieurs couches, dans lequel la couche, respectivement les couches, est/sont formée(s) d'un ou plusieurs polymère(s), **caractérisé en ce que** le procédé comprend les étapes suivantes :
a) co-extrusion d'un film comprenant le(s) polymère(s), dans lequel au moins un polymère est doté d'un agent réticulant, et le film est fabriqué avec deux couches de finition et une couche centrale, dans lequel les couches de finition sont formées avec une teneur de 20 à 60 % en poids d'une ou plusieurs charge(s) particulaire(s) ;
b) étirage de la couche ainsi formée ;
c) thermofixation du film dans l'état tendu,
d) réticulation de l'au moins un polymère qui est doté un agent réticulant ;
e) traitement en option d'au moins une surface du film ;
f) enroulement en option du film et/ou découpe du fil en un papier synthétique.

2. Procédé selon la revendication 1, **caractérisé en ce que** le film est étiré biaxialement.

3. Procédé selon la revendication 2, **caractérisé en ce qu'**un degré d'étirement le long de chaque axe fait environ 1:1,5 à 1:2,5.

4. Procédé selon l'une des revendications 1 à 3, **caractérisé en ce que** la thermofixation est effectuée à une température d'environ 100 à 150 °C.

5. Procédé selon la revendication 4, **caractérisé en ce que** la thermofixation est effectuée pendant une durée de 2 à 10 minutes.

6. Procédé selon la revendication 1, **caractérisé en ce que** les couches de finition sont formées avec une teneur de 35 à 45 % en poids de la ou des charge (s) particulaire(s).

7. Procédé selon la revendication 1, **caractérisé en ce que** la/les charge(s) est/sont sélectionnée(s) parmi le groupe composé du carbonate de calcium, du kaolin, de la dolomite et du talc.

8. Procédé selon la revendication 1, **caractérisé en ce que** la/les charge(s) présente(nt) une taille de particules d₅₀ de 0,50 à 10 µm, de préférence de 1 à 5 µm.

9. Procédé selon la revendication 1, **caractérisé en ce que** les couches de finition sont formées avec une teneur allant jusqu'à 10 % en poids, de préférence de 4 à 9 % en poids d'un pigment comme l'oxyde de titane ou l'oxyde de zinc.

10. Procédé selon la revendication 1, **caractérisé en ce que** la couche centrale est fabriquée en tant que couche expansée.

11. Procédé selon la revendication 1, **caractérisé en ce que** la couche centrale est conçue au moins 2,5 fois plus épaisse que les couches de finition.

12. Procédé selon l'une des revendications 1 à 11, **caractérisé en ce que** l'au moins un polymère est formé dans une teneur de 51 à 100 % en poids de matières premières renouvelables.

13. Procédé selon la revendication 12, **caractérisé en ce que** de l'acide polylactique est employé en tant que polymère pour les couches.

14. Papier synthétique pouvant être obtenu selon les revendications 1 à 13.

15. Papier synthétique selon la revendication 14 qui est biodégradable.

16. Papier synthétique selon la revendication 14 ou 15, dans lequel le papier synthétique est formé à partir de polymères extraits de matières premières renouvelables.
